# EUROPEAN PATENT SPECIFICATION

(11) **EP 4 462 110 B1**
(45) Date of publication and mention of the grant of the patent: **15.04.2026**
(21) Application number: 23868413.8
(22) Date of filing: 24.08.2023
(51) Int. Cl.: G01N 25/16, G01B 11/02, G01B 11/16, H01M 50/489

(54) **EVALUATION DEVICE AND EVALUATION METHOD FOR THERMAL SHRINKAGE OF SEPARATOR**
BEURTEILUNGSVORRICHTUNG UND BEURTEILUNGSVERFAHREN FÜR WÄRMESCHRUMPFUNG EINES SEPARATORS
DISPOSITIF D'ÉVALUATION ET PROCÉDÉ D'ÉVALUATION DU RETRAIT THERMIQUE D'UN SÉPARATEUR

(30) Priority: 22.09.2022 KR 20220119715
(43) Date of publication of application: 13.11.2024
(73) Proprietor: LG Chem, Ltd., Yeongdeungpo-gu Seoul 07336 (KR)
(72) Inventor: MOON, Jae Young, Daejeon 34122 (KR); BAE, Sung Hak, Daejeon 34122 (KR); JEON, Sang Hyuk, Daejeon 34122 (KR)
(74) Representative: Hoffmann Eitle
(86) International application number: PCT/KR2023/012534
(87) International publication number: WO 2024/063356

(56) References cited:
- CN-A- 108 918 579
- CN-A- 110 568 004
- CN-A- 113 075 255
- KR-A- 20210 059 477
- KR-A- 20210 059 477
- KR-B1- 102 206 908
- KR-B1- 102 217 201

## Description

### Technical Field

The present disclosure claims the benefit of the filing date of Korean Patent Application No. 10-2022-0119715, filled with the Korean Intellectual Property Office on September 22, 2022.

The present disclosure relates to a separator thermal shrinkage rate evaluation device and evaluation method that can easily evaluate the thermal shrinkage rate of a separator that is one of the basic materials of a battery.

### Background Art

In general, a separator is one of the basic materials of a battery that stores battery energy. Such a separator is located between a positive electrode and a negative electrode of the battery, physically blocks contact between the two electrodes, and selectively allows only small lithium ions to pass therethrough, making it essential for safe use of electrical energy.
KR 2021 0059477 A refers to a method and an apparatus for measuring thermal shrinkage ratio of a separation membrane.

Recently, as fires occur in vehicles and facilities using large-capacity batteries, the safety of the batteries has become more important. Accordingly, the safety standards of the separator are also being strengthened.

A separator thermal shrinkage rate evaluation item, which is one of the items for evaluating the stability of the separator, is a method for evaluating the degree of shrinkage of the separator due to heat.

Specifically, in a method for measuring a thermal shrinkage rate in the related art, a separator sample is shrunk at specific temperature and time, and then a worker directly measures the degree of shrinkage by using a ruler.

However, the thermal shrinkage rate evaluation method in the related art as described above is based on the concept of simply measuring the length of the separator sample, and has the disadvantage of low accuracy and reliability and very low evaluation speed. In particular, when the separator sample is shrunk and then does not maintain a square shape with an interior angle of 90°, measuring a shrinkage rate may be difficult.

### DISCLOSURE

### Technical Problem

Embodiments of the present disclosure intend to provide a separator thermal shrinkage rate evaluation device and evaluation method that can easily evaluate the thermal shrinkage rate of a separator.

### Technical Solution

The present invention is defined by the independent claims. Optional preferred features are recited in the dependent claims. A separator thermal shrinkage rate evaluation device according to the present disclosure for implementing the object described above may include: a mounting table on which a separator sample to be evaluated is placed; a lighting unit that emits light toward at least one of a top surface or a bottom surface of the separator sample; an imaging unit that takes an image of the separator sample; and an evaluation unit that determines a degree of shrinkage of the separator sample by comparing values of a length in each direction of the separator sample measured through the image taken by the imaging unit with a reference value before thermal shrinkage.

In such a case, at least four reference points constituting a square among a plurality of points representing a border of the separator sample are set on the separator sample.

The separator sample may be formed into a square shape, and the reference point may be a vertex of the separator sample.

The evaluation unit includes: a first measurement range set so that two points closest to a center of a plane of the separator sample in a Y-axis direction are selected from the four reference points, parallel virtual horizontal lines respectively passing through the selected two points are formed, and a plurality of lengths of the separator sample in an X-axis direction are measured in a range between the virtual horizontal lines; and a second measurement range set so that two points closest to the center of the plane of the separator sample in the X-axis direction are selected from the four reference points, parallel virtual vertical lines respectively passing through the selected two points are formed, and a plurality of lengths of the separator sample in the Y-axis direction are measured in a range between the virtual vertical lines.

The evaluation unit may select, as a measurement value, the shortest length among the plurality of lengths measured in the first measurement range and the second measurement range.

The evaluation unit may ascertain the separator sample by using a difference in brightness or gray scale of the taken image.

The lighting unit may include: a first lighting unit that is provided below the mounting table and emits light toward a bottom surface of the separator sample; and a second lighting unit that is provided above the mounting table and emits light toward a top surface of the separator sample.

The first lighting unit may be integrally inserted inside the mounting table and may emit light toward an entire area of the mounting table.

The imaging unit may be provided above the mounting table.

A separator thermal shrinkage rate evaluation method according to the present disclosure may include: a first step of cutting a separator sample to be evaluated to a reference value of a predetermined size and setting at least four reference points on an upper surface of the cut separator sample; a second step of shrinking the separator sample by applying heat at a predetermined temperature for a predetermined period of time; a third step of placing the shrunk separator sample on an upper surface of a mounting table and taking an image of the separator sample; a fourth step of selecting two points closest to a center of a plane of the separator sample in a Y-axis direction among the four reference points on the basis of the taken image, forming parallel virtual horizontal lines respectively passing through the two selected points, and measuring a length of the separator sample in an X-axis direction in a range between the virtual horizontal lines; a fifth step of selecting two points closest to the center of the plane of the separator sample in the X-axis direction among the four reference points on the basis of the taken image, forming parallel virtual vertical lines respectively passing through the two selected points, and measuring a length of the separator sample in the Y-axis direction in a range between the virtual vertical lines; and a sixth step of calculating a thermal shrinkage rate by comparing the lengths measured in the X-axis direction and the Y-axis direction with a reference value.

In such a case, in the fourth step and the fifth step, the shortest length of the lengths measured in the X-axis direction and the Y-axis direction may be selected as a measurement value.

### Advantageous Effects

A separator thermal shrinkage rate evaluation device and evaluation method configured as described above according to the present disclosure have the advantage of setting first and second measurement ranges in an X-axis direction and a Y-axis direction, respectively, on the basis of four reference points set on a separator sample forming a square, and measuring a thermal shrinkage rate by comparing measured values obtained by measuring the shortest lengths of the separator sample in the measurement ranges with a reference value, thereby obtaining more accurate data.

### Brief Description of Drawings

FIG. 1 is an overall schematic diagram illustrating a separator thermal shrinkage rate evaluation device according to the present disclosure.
FIG. 2 is a schematic perspective view of the separator thermal shrinkage rate evaluation device according to the present disclosure.
FIG. 3 is a plan view illustrating a separator sample before and after thermal shrinkage according to the present disclosure.
FIG. 4 is a view illustrating the principle in which an evaluation unit according to the present disclosure evaluates a shrinkage rate of the separator sample in an X-axis direction.
FIG. 5 is a view illustrating the principle in which the evaluation unit according to the present disclosure evaluates a shrinkage rate of the separator sample in a Y-axis direction.

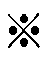 Description of reference numerals

1: separator sample
L1, L2: measurement values
P1~P4: reference point
R: reference value
d1: first measurement range
d2: second measurement range
h1, h2: virtual horizontal line
v1, v2: virtual vertical line
100: thermal shrinkage rate evaluation device
110: mounting table
120: lighting unit
121: first lighting unit
122: second lighting unit
140: imaging unit
150: evaluation unit

### Best Mode

Hereinafter, the configuration and operation of specific embodiments of the present disclosure are described in detail with reference to the accompanying drawings.

Noted that in assigning reference numerals to elements in the drawings, the same reference numerals denote the same elements throughout the drawings even in cases where the elements are shown in different drawings.

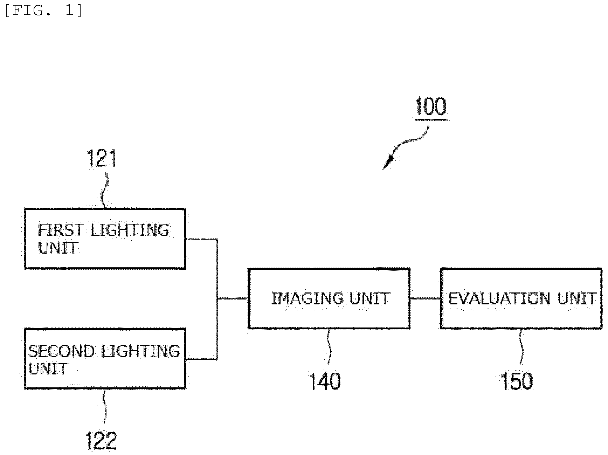

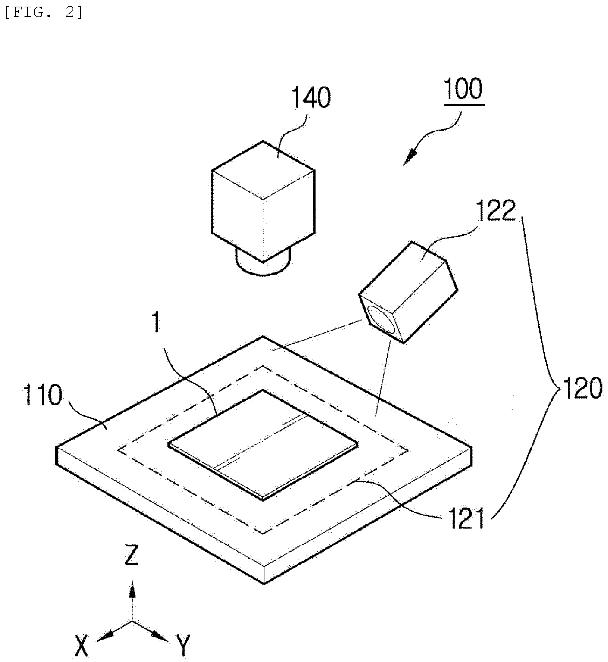

FIG. 1 is an overall schematic diagram illustrating a separator thermal shrinkage rate evaluation device according to the present disclosure, and FIG. 2 is a schematic perspective view of the separator thermal shrinkage rate evaluation device according to the present disclosure.

Referring to FIGS. 1 and 2, a separator thermal shrinkage rate evaluation device 100 according to a preferred embodiment of the present disclosure includes a mounting table 110, a lighting unit 120, an imaging unit 140, and an evaluation unit 150.

A detailed description of the configuration of the present disclosure is as follows.

First, the mounting table 110 may be formed as a plate having a top surface on which a separator sample 1 to be evaluated can be placed. Such a mounting table 110 may be made of a transparent or semi-transparent material so that the boundary of the separator sample 1 can be easily ascertained through the lighting unit 120 to be described below. Of course, the mounting table 110 is not limited thereto and can be variously changed and applied.

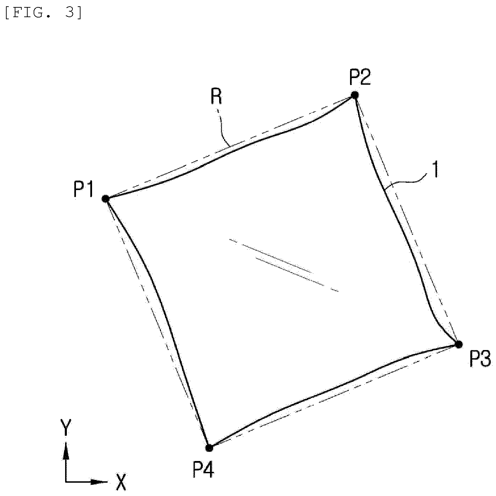

Referring to FIG. 3, the separator sample 1 placed on the mounting table 110 may be formed into, for example, a square shape (5 cm×5 cm) so that the degree of shrinkage may be easily measured, and on an upper surface of the mounting table 110, the separator sample 1 shrunk due to heat may be placed.

That is, a size reference value R before shrinkage of the separator sample 1 may be a standardized square shape, and accordingly, the degree of shrinkage may be evaluated by measuring the length in a specific direction of the separator sample 1 after shrinkage through the thermal shrinkage rate evaluation device 100. A more specific shrinkage evaluation method is described below.

At least four reference points P1 to P4 constituting a square among a plurality of points representing the border of the sample may be set on the upper surface of the separator sample 1. In this case, for convenience of explanation, the present disclosure illustrates and describes an example in which the reference points P1 to P4 before and after thermal shrinkage of the separator sample 1 are formed at the same positions (vertices). Of course, the reference points P1 to P4 are not limited thereto, and may be displayed in the form of marks at predetermined positions formed on the upper surface of the separator sample 1 in various shapes, rather than at the vertices of a square.

The lighting unit 120 may emit light toward at least one of a top surface or a bottom surface of the separator sample 1.

For example, referring to FIG. 2, the lighting unit 120 may include a first lighting unit 121 that is provided below the mounting table 110 and emits light toward the bottom surface of the separator sample 1.

Preferably, the first lighting unit 121 may be integrally inserted inside the mounting table 110 and may emit light toward an entire area of the mounting table 110.

As another example, the lighting unit 120 may include a second lighting unit 122 that is provided above the mounting table 110 and emits light toward the top surface of the separator sample 1.

In this case, at least one second lighting unit 122 may be installed directly above the mounting table 110, or the second lighting unit 122 may be installed symmetrically on both sides of an upper part of the mounting table 110 to emit light obliquely toward the separator sample 1. In this case, the present disclosure does not limit the specific arrangement structure of the second lighting unit 122.

The imaging unit 140 takes an image of the separator sample 1. For example, the imaging unit 140 may be spaced apart from a portion directly above the separator sample 1 placed on the upper surface of the mounting table 110. Such an imaging unit 140 may take an image of the separator sample 1 irradiated with light through the first lighting unit 121 and the second lighting unit 122.

The evaluation unit 150 measures the thermal shrinkage rate of the separator sample 1 through the image taken by the imaging unit 140. Such an evaluation unit 150 may determine the degree of shrinkage by comparing measurement values L1 and L2 of the length in each direction of the separator sample 1 on the basis of the reference points P1 to P4 set on the upper surface of the separator sample 1 with a reference value R (see FIG. 3) before thermal shrinkage.

In this case, the evaluation unit 150 may ascertain the separator sample 1 by using the difference in brightness or gray scale of the taken image.

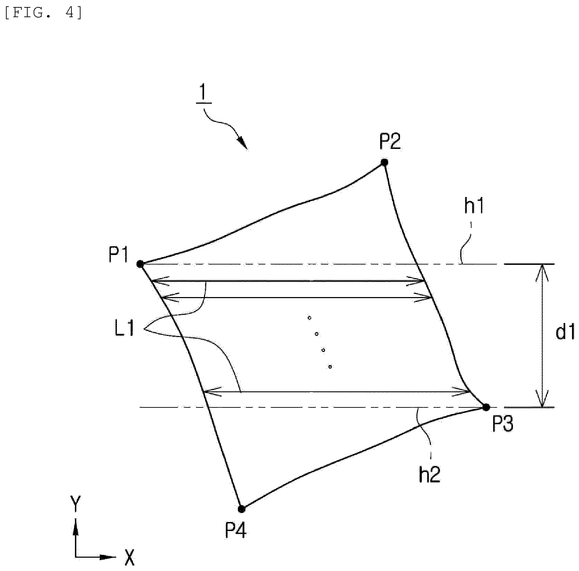

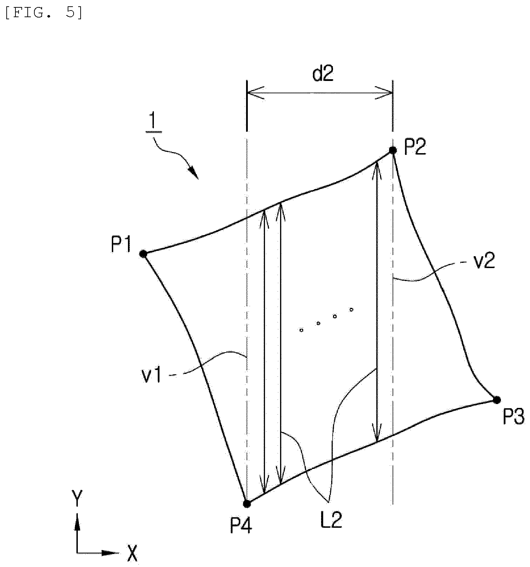

The evaluation unit 150 may set a first measurement range d1 (see FIG. 4) for measuring the length of the separator sample 1 in the X-axis direction and a second measurement range d2 (see FIG. 5) for measuring the length of the separator sample 1 in the Y-axis direction.

Specifically, referring to FIG. 4, the first measurement range d1 may be set by selecting the two points P1 and P3 closest to the center of a plane of the separator sample 1 in the Y-axis direction among the four reference points set on the upper surface of the separator sample 1 and forming parallel virtual horizontal lines h1 and h2 passing through the selected two points P1 and P3, respectively. In the first measurement range d1 between the virtual horizontal lines h1 and h2, a plurality of lengths L1 of the separator sample 1 in the X-axis direction may be measured. In this case, the evaluation unit 150 may select, as a measurement value L1, the shortest length among the plurality of lengths L1 measured in the first measurement range d1.

Referring to FIG. 5, the second measurement range d2 may be set by selecting the two points P2 and P4 closest to the center of the plane of the separator sample 1 in the X-axis direction among the four reference points P1 to P4 set on the upper surface of the separator sample 1 and forming parallel virtual vertical lines v1 and v2 passing through the selected two points P2 and P4, respectively. In the second measurement range d2 between the virtual vertical lines v1 and v2, a plurality of lengths L2 of the separator sample 1 in the Y-axis direction may be measured. In this case, the evaluation unit 150 may select, as a measurement value L2, the shortest length among the plurality of lengths L2 measured in the second measurement range d2, like the case of the first measurement range d1.

Hereinafter, a separator thermal shrinkage rate evaluation process using the above-described separator thermal shrinkage rate evaluation device 100 according to the present disclosure is described.

First, the separator sample 1 to be evaluated is cut to a reference value R of a predetermined size, and at least four reference points P1 to P4 are set on the upper surface of the cut separator sample 1 (see FIG. 3).

Subsequently, the cut separator sample 1 is shrunk by applying heat at a predetermined temperature and for a predetermined period of time.

Subsequently, the shrunken separator sample 1 is placed on the upper surface of the mounting table 110 and an image of the separator sample 1 is taken through the imaging unit 140 (see FIG. 2).

The evaluation unit 150 selects the two points P1 and P3 closest to the center of the plane of the separator sample 1 in the Y-axis direction among the four reference points P1 to P4 on the basis of the taken image. Subsequently, the evaluation unit 150 forms the parallel virtual horizontal lines h1 and h2 respectively passing through the two selected points P1 and P3, and measures the length L1 of the separator sample 1 in the X-axis direction in the first measurement range d1 between the virtual horizontal lines h1 and h2 (see FIG. 4).

In addition, the evaluation unit 150 selects the two points P2 and P4 closest to the center of the plane of the separator sample 1 in the X-axis direction among the four reference points P1 to P4 on the basis of the taken image. Subsequently, the evaluation unit 150 forms the parallel virtual vertical lines v1 and v2 respectively passing through the two selected points P2 and P4, and measures the length L2 of the separator sample 1 in the Y-axis direction in the second measurement range d2 between the virtual vertical lines v1 and v2 (see FIG. 5).

In this case, the evaluation unit 150 may select the shortest lengths among the lengths measured in the first measurement range d1 and the second measurement range d2 as the measurement values L1 and L2 in the X-axis direction and the Y-axis direction, respectively.

Finally, the evaluation unit 150 calculates a thermal shrinkage rate by comparing the measured length values L1 and L2 in the X-axis direction and the Y-axis direction with the reference value R (see FIG. 3).

The separator thermal shrinkage rate evaluation device 100 configured as described above according to the present disclosure sets the first and second measurement ranges d1 and d2 in the X-axis direction and the Y-axis direction, respectively, on the basis of the four reference points P1 to P4 set on the separator sample 1 forming a square, and measures a thermal shrinkage rate by comparing the measured values L1 and L2 obtained by measuring the shortest lengths of the separator sample 1 in the measurement ranges with the reference value R, thereby obtaining more accurate data.

## Claims

1. A separator thermal shrinkage rate evaluation device (100) comprising:
a mounting table (110) on which a separator sample (1) to be evaluated is placed;
a lighting unit (120) that emits light toward at least one of a top surface or a bottom surface of the separator sample (1);
an imaging unit (140) that takes an image of the separator sample (1); and
an evaluation unit (150) that determines a degree of shrinkage of the separator sample (1) by comparing values of a length in each direction of the separator sample (1) measured through the image taken by the imaging unit (140) with a reference value (R) before thermal shrinkage, **characterized in that**,
wherein at least four reference points (P1, P2, P3, P4) constituting a square among a plurality of points representing a border of the separator sample (1) are set on the separator sample (1),
wherein the evaluation unit (150) is configured to:
set a first measurement range (d1) by selecting two points closest to a center of a plane of the separator sample (1) in a Y-axis direction from the four reference points (P1, P2, P3, P4) and forming parallel virtual horizontal lines (h1, h2) respectively passing through the selected two points, and then measure a plurality of lengths of the separator sample (1) in an X-axis direction in a range between the virtual horizontal lines (h1, h2); and
set a second measurement range (d2) by selecting two points closest to the center of the plane of the separator sample (1) in the X-axis direction from the four reference points (P1, P2, P3, P4) and forming parallel virtual vertical lines (v1, v2) respectively passing through the selected two points, and then measure a plurality of lengths of the separator sample (1) in the Y-axis direction in a range between the virtual vertical lines (v1, v2).

2. The separator thermal shrinkage rate evaluation device (100) according to claim 1, wherein the separator sample (1) is formed into a square shape, and
the reference point is a vertex of the separator sample (1).

3. The separator thermal shrinkage rate evaluation device (100) according to claim 1 or 2, wherein the evaluation unit (150) selects, as measurement values (L1, L2), the shortest length among the plurality of lengths measured in the first measurement range (d1) and the shortest length among the plurality of lengths measured in the second measurement range (d2).

4. The separator thermal shrinkage rate evaluation device (100) according to any one of claims 1 to 3, wherein the evaluation unit (150) ascertains the separator sample (1) by using a difference in brightness or gray scale of the taken image.

5. The separator thermal shrinkage rate evaluation device (100) according to any one of claims 1 to 4, wherein the lighting unit (120) comprises:
a first lighting unit (121) that is provided below the mounting table (110) and emits light toward a bottom surface of the separator sample (1); and
a second lighting unit (122) that is provided above the mounting table (110) and emits light toward a top surface of the separator sample (1).

6. The separator thermal shrinkage rate evaluation device (100) according to claim 5, wherein the first lighting unit (121) is integrally inserted inside the mounting table (110) and emits light toward an entire area of the mounting table (110).

7. The separator thermal shrinkage rate evaluation device (100) according to any one of claims 1 to 6, wherein the imaging unit (140) is provided above the mounting table (110).

8. A separator thermal shrinkage rate evaluation method comprising:
a first step of cutting a separator sample (1) to be evaluated to a reference value (R) of a predetermined size and setting at least four reference points (P1, P2, P3, P4) on an upper surface of the cut separator sample (1);
a second step of shrinking the separator sample (1) by applying heat at a predetermined temperature for a predetermined period of time;
a third step of placing the shrunk separator sample (1) on an upper surface of a mounting table (110) and taking an image of the separator sample (1);
a fourth step of selecting two points closest to a center of a plane of the separator sample (1) in a Y-axis direction among the four reference points (P1, P2, P3, P4) on the basis of the taken image, forming parallel virtual horizontal lines (h1, h2) respectively passing through the two selected points, and measuring a length of the separator sample (1) in an X-axis direction in a range between the virtual horizontal lines (h1, h2);
a fifth step of selecting two points closest to the center of the plane of the separator sample (1) in the X-axis direction among the four reference points (P1, P2, P3, P4) on the basis of the taken image, forming parallel virtual vertical lines (v1, v2) respectively passing through the two selected points, and measuring a length of the separator sample (1) in the Y-axis direction in a range between the virtual vertical lines (v1, v2); and
a sixth step of calculating a thermal shrinkage rate by comparing the lengths measured in the X-axis direction and the Y-axis direction with a reference value (R).

9. The separator thermal shrinkage rate evaluation method according to claim 8, wherein, in the fourth step and the fifth step, the shortest length among the lengths measured in the X-axis direction and the shortest length among the lengths measured in the Y-axis direction are selected as measurement values (L1, L2).

## Patentansprüche

1. Beurteilungsvorrichtung für Wärmeschrumpfrate eines Separators (100) umfassend:
einen Auflagetisch (110), auf den eine zu beurteilende Separatorprobe (1) gelegt wird;
eine Beleuchtungseinheit (120), die Licht in Richtung auf mindestens eine von einer Oberseite oder einer Unterseite der Separatorprobe (1) abstrahlt;
eine Bildaufnahmeeinheit (140), die ein Bild der Separatorprobe (1) aufnimmt; und
eine Beurteilungseinheit (150), die einen Schrumpfungsgrad der Separatorprobe (1) durch Vergleichen von Werten einer Länge in jeder Richtung der Separatorprobe (1), die durch das von der Bildaufnahmeeinheit (140) aufgenommene Bild gemessen werden, mit einem Referenzwert (R) vor der Wärmeschrumpfung bestimmt, **dadurch gekennzeichnet, dass**
mindestens vier Referenzpunkte (P1, P2, P3, P4), die unter einer Vielzahl von Punkten, die einen Rand der Separatorprobe (1) darstellen, ein Quadrat bilden, auf der Separatorprobe (1) festgelegt werden,
wobei die Beurteilungseinheit (150) ausgebildet ist:
einen ersten Messbereich (d1) festzulegen, indem zwei Punkte, die einem Zentrum einer Ebene der Separatorprobe (1) in einer Y-Achsenrichtung am nächsten liegen, aus den vier Referenzpunkten (P1, P2, P3, P4) ausgewählt werden
und parallele virtuelle horizontale Linien (h1, h2) gebildet werden, die jeweils durch die ausgewählten zwei Punkte verlaufen, und dann eine Vielzahl von Längen der Separatorprobe (1) in einer X-Achsenrichtung in einem Bereich zwischen den virtuellen horizontalen Linien (h1, h2) zu messen; und
einen zweiten Messbereich (d2) festzulegen, indem zwei Punkte, die dem Zentrum der Ebene der Separatorprobe (1) in der X-Achsenrichtung am nächsten liegen, aus den vier Referenzpunkten (P1, P2, P3, P4) ausgewählt werden und parallele virtuelle vertikale Linien (v1, v2) gebildet werden, die jeweils durch die ausgewählten zwei Punkte verlaufen, und dann eine Vielzahl von Längen der Separatorprobe (1) in der Y-Achsenrichtung in einem Bereich zwischen den virtuellen vertikalen Linien (v1, v2) zu messen.

2. Beurteilungsvorrichtung für Wärmeschrumpfrate eines Separators (100) nach Anspruch 1, wobei die Separatorprobe (1) in einer quadratischen Form gebildet ist, und
der Referenzpunkt ein Eckpunkt der Separatorprobe (1) ist.

3. Beurteilungsvorrichtung für Wärmeschrumpfrate eines Separators (100) nach Anspruch 1 oder 2, wobei die Beurteilungseinheit (150) als Messwerte (L1, L2) die kürzeste Länge unter der Vielzahl von Längen, die in dem ersten Messbereich (d1) gemessen werden, und die kürzeste Länge unter der Vielzahl von Längen, die in dem zweiten Messbereich (d2) gemessen werden, auswählt.

4. Beurteilungsvorrichtung für Wärmeschrumpfrate eines Separators (100) nach einem der Ansprüche 1 bis 3, wobei die Beurteilungseinheit (150) die Separatorprobe (1) unter Verwendung eines Unterschieds in Helligkeit oder Graustufe des aufgenommenen Bildes feststellt.

5. Beurteilungsvorrichtung für Wärmeschrumpfrate eines Separators (100) nach einem der Ansprüche 1 bis 4, wobei die Beleuchtungseinheit (120) umfasst:
eine erste Beleuchtungseinheit (121), die unterhalb des Auflagetisches (110) bereitgestellt ist und Licht in Richtung auf eine Unterseite der Separatorprobe (1) abstrahlt; und
eine zweite Beleuchtungseinheit (122), die oberhalb des Auflagetisches (110) bereitgestellt ist und Licht in Richtung auf eine Oberseite der Separatorprobe (1) abstrahlt.

6. Beurteilungsvorrichtung für Wärmeschrumpfrate eines Separators (100) nach Anspruch 5, wobei die erste Beleuchtungseinheit (121) integral innerhalb des Auflagetisches (110) eingesetzt ist und Licht in Richtung auf einen gesamten Bereich des Auflagetisches (110) abstrahlt.

7. Beurteilungsvorrichtung für Wärmeschrumpfrate eines Separators (100) nach einem der Ansprüche 1 bis 6, wobei die Bildaufnahmeeinheit (140) oberhalb des Auflagetisches (110) bereitgestellt ist.

8. Beurteilungsverfahren für Wärmeschrumpfrate eines Separators umfassend:
einen ersten Schritt des Schneidens einer zu beurteilenden Separatorprobe (1) auf einen Referenzwert (R) einer vorgegebenen Größe und des Festlegens von mindestens vier Referenzpunkten (P1, P2, P3, P4) auf einer Oberseite der geschnittenen Separatorprobe (1);
einen zweiten Schritt des Schrumpfens der Separatorprobe (1) durch Anwenden von Wärme bei einer vorgegebenen Temperatur für einen vorgegebenen Zeitraum;
einen dritten Schritt des Platzierens der geschrumpften Separatorprobe (1) auf einer Oberseite eines Auflagetisches (110) und des Aufnehmens eines Bildes der Separatorprobe (1);
einen vierten Schritt des Auswählens von zwei Punkten, die einem Zentrum einer Ebene der Separatorprobe (1) in einer Y-Achsenrichtung unter den vier Referenzpunkten (P1, P2, P3, P4) auf der Grundlage des aufgenommenen Bildes am nächsten liegen, des Bildens von parallelen virtuellen horizontalen Linien (h1, h2), die jeweils durch die zwei ausgewählten Punkte verlaufen, und des Messens einer Länge der Separatorprobe (1) in einer X-Achsenrichtung in einem Bereich zwischen den virtuellen horizontalen Linien (h1, h2);
einen fünften Schritt des Auswählens von zwei Punkten, die dem Zentrum der Ebene der Separatorprobe (1) in der X-Achsenrichtung unter den vier Referenzpunkten (P1, P2, P3, P4) auf der Grundlage des aufgenommenen Bildes am nächsten liegen, des Bildens von parallelen virtuellen vertikalen Linien (v1, v2), die jeweils durch die zwei ausgewählten Punkte verlaufen, und des Messens einer Länge der Separatorprobe (1) in der Y-Achsenrichtung in einem Bereich zwischen den virtuellen vertikalen Linien (v1, v2); und
einen sechsten Schritt des Berechnens einer Wärmeschrumpfrate durch Vergleichen der in der X-Achsenrichtung und der Y-Achsenrichtung gemessenen Längen mit einem Referenzwert (R).

9. Beurteilungsverfahren für Wärmeschrumpfrate eines Separators nach Anspruch 8, wobei, im vierten Schritt und im fünften Schritt, die kürzeste Länge unter den in der X-Achsenrichtung gemessenen Längen und die kürzeste Länge unter den in der Y-Achsenrichtung gemessenen Längen als Messwerte (L1, L2) ausgewählt werden.

## Revendications

1. Dispositif (100) d'évaluation du taux de retrait thermique d'un séparateur comprenant :
une table de montage (110) sur laquelle un échantillon de séparateur (1) à évaluer est placé ;
une unité d'éclairage (120) qui émet de la lumière vers au moins une d'une surface supérieure ou d'une surface inférieure de l'échantillon de séparateur (1) ;
une unité d'imagerie (140) qui prend une image de l'échantillon de séparateur (1) ; et
une unité d'évaluation (150) qui détermine un degré de retrait de l'échantillon de séparateur (1) en comparant des valeurs d'une longueur dans chaque direction de l'échantillon de séparateur (1) mesurées au moyen de l'image prise par l'unité d'imagerie (140) à une valeur de référence (R) avant le retrait thermique, **caractérisé en ce que**,
dans lequel au moins quatre points de référence (P1, P2, P3, P4) constituant un carré parmi une pluralité de points représentant un bord de l'échantillon de séparateur (1) sont définis sur l'échantillon de séparateur (1),
dans lequel l'unité d'évaluation (150) est configurée pour :
définir une première plage de mesure (d1) en sélectionnant deux points les plus proches d'un centre d'un plan de l'échantillon de séparateur (1) dans une direction de l'axe Y parmi les quatre points de référence (P1, P2, P3, P4) et former des lignes horizontales virtuelles parallèles (h1, h2) passant respectivement par les deux points sélectionnés, puis mesurer une pluralité de longueurs de l'échantillon de séparateur (1) dans une direction de l'axe X dans une plage entre les lignes horizontales virtuelles (h1, h2) ; et
définir une deuxième plage de mesure (d2) en sélectionnant deux points les plus proches du centre du plan de l'échantillon de séparateur (1) dans la direction de l'axe X parmi les quatre points de référence (P1, P2, P3, P4) et en formant des lignes verticales virtuelles parallèles (v1, v2) passant respectivement par les deux points sélectionnés, puis mesurer une pluralité de longueurs de l'échantillon de séparateur (1) dans une direction de l'axe Y dans une plage entre les lignes verticales virtuelles (v1, v2).

2. Dispositif (100) d'évaluation du taux de retrait thermique d'un séparateur selon la revendication 1, dans lequel l'échantillon de séparateur (1) est formé en une forme carrée, et
le point de référence est un sommet de l'échantillon de séparateur (1).

3. Dispositif (100) d'évaluation du taux de retrait thermique d'un séparateur selon la revendication 1 ou 2, dans lequel l'unité d'évaluation (150) sélectionne, en tant que valeurs de mesure (L1, L2), la longueur la plus courte parmi la pluralité de longueurs mesurées dans la première plage de mesure (d1) et la longueur la plus courte parmi la pluralité de longueurs mesurées dans la deuxième plage de mesure (d2).

4. Dispositif (100) d'évaluation du taux de retrait thermique d'un séparateur selon l'une quelconque des revendications 1 à 3, dans lequel l'unité d'évaluation (150) identifie l'échantillon de séparateur (1) en utilisant une différence de luminosité ou de niveau de gris de l'image prise.

5. Dispositif (100) d'évaluation du taux de retrait thermique d'un séparateur selon l'une quelconque des revendications 1 à 4, dans lequel l'unité d'éclairage (120) comprend :
une première unité d'éclairage (121) qui est prévue au-dessous de la table de montage (110) et émet de la lumière vers une surface inférieure de l'échantillon de séparateur (1) ; et
une deuxième unité d'éclairage (122) qui est prévue au-dessus de la table de montage (110) et émet de la lumière vers une surface supérieure de l'échantillon de séparateur (1).

6. Dispositif (100) d'évaluation du taux de retrait thermique d'un séparateur selon la revendication 5, dans lequel la première unité d'éclairage (121) est insérée intégralement à l'intérieur de la table de montage (110) et émet de la lumière vers une zone entière de la table de montage (110).

7. Dispositif (100) d'évaluation du taux de retrait thermique d'un séparateur selon l'une quelconque des revendications 1 à 6, dans lequel l'unité d'imagerie (140) est prévue au-dessus de la table de montage (110).

8. Procédé d'évaluation du taux de retrait thermique d'un séparateur comprenant :
une première étape de découpe d'un échantillon de séparateur (1) à évaluer à une valeur de référence (R) d'une taille prédéterminée et de définition d'au moins quatre points de référence (P1, P2, P3, P4) sur une surface supérieure de l'échantillon de séparateur (1) découpé ;
une deuxième étape de provocation du retrait de l'échantillon de séparateur (1) en appliquant de la chaleur à une température prédéterminée pendant une période de temps prédéterminée ;
une troisième étape de placement de l'échantillon de séparateur (1) ayant subi le retrait sur une surface supérieure d'une table de montage (110) et de prise d'une image de l'échantillon de séparateur (1) ;
une quatrième étape de sélection de deux points les plus proches d'un centre d'un plan de l'échantillon de séparateur (1) dans une direction de l'axe Y parmi les quatre points de référence (P1, P2, P3, P4) sur la base de l'image prise, de formation de lignes horizontales virtuelles parallèles (h1, h2) passant respectivement par les deux points sélectionnés, et de mesure d'une longueur de l'échantillon de séparateur (1) dans une direction de l'axe X dans une plage entre les lignes horizontales virtuelles (h1, h2) ;
une cinquième étape de sélection de deux points les plus proches du centre du plan de l'échantillon de séparateur (1) dans la direction de l'axe X parmi les quatre points de référence (P1, P2, P3, P4) sur la base de l'image prise, de formation de lignes verticales virtuelles parallèles (v1, v2) passant respectivement par les deux points sélectionnés, et de mesure d'une longueur de l'échantillon de séparateur (1) dans une direction de l'axe Y dans une plage entre les lignes verticales virtuelles (v1, v2) ; et
une sixième étape de calcul d'un taux de retrait thermique en comparant les longueurs mesurées dans la direction de l'axe X et la direction de l'axe Y à une valeur de référence (R).

9. Procédé d'évaluation du taux de retrait thermique d'un séparateur selon la revendication 8, dans lequel, dans la quatrième étape et la cinquième étape, la longueur la plus courte parmi les longueurs mesurées dans la direction de l'axe X et la longueur la plus courte parmi les longueurs mesurées dans la direction de l'axe Y sont sélectionnées en tant que valeurs de mesure (L1, L2).
